# EUROPEAN PATENT SPECIFICATION

(11) **EP 4 043 374 B1**
(45) Date of publication and mention of the grant of the patent: **04.10.2023**
(21) Application number: 21209529.3
(22) Date of filing: 22.11.2021
(51) Int. Cl.: B65H 18/08, B65H 26/02

(54) **BRAKE OF AN IDLE ROLL OF A FIBER WEB MACHINE, IN PARTICULAR OF A SLITTER-WINDER**
BREMSE EINER LEERLAUFROLLE EINER FASERBAHNMASCHINE, INSBESONDERE EINES ROLLENSCHNEIDERS
FREIN D'UN ROULEAU LIBRE D'UNE MACHINE À BANDES FIBREUSES, EN PARTICULIER D'UNE COUPEUSE-BOBINEUSE

(30) Priority: 11.02.2021 FI 20215138
(43) Date of publication of application: 17.08.2022
(73) Proprietor: Valmet Technologies Oy, 02150 Espoo (FI)
(72) Inventor: LESKINEN, Arto, 05450 Nukari (FI)
(74) Representative: Berggren Oy

(56) References cited:
- WO-A1-2011/135175
- US-A- 3 841 580
- US-A- 4 347 962
- US-A1- 2004 182 965

## Description

### Technical field

The invention relates in general to slitter-winders for winding longitudinally slit paper and board webs into customer rolls and to braking idle rolls. Especially the invention relates to a brake for an idle roll of a slitter winder according to the preamble part of the independent claim 1.

### Background

It is known that a fiber web, e.g. paper, is manufactured in machines which together constitute a paper-manufacturing line which can be hundreds of meters long. Modern paper machines can produce over 450,000 tons of paper per year. The speed of the paper machine can exceed 2,000 m/min and the width of the paper web can be more than 11 meters.

In paper-manufacturing lines, the manufacture of paper takes place as a continuous process. A paper web completing in the paper machine is reeled by a reel-up around a reeling shaft i.e. a reel spool into a parent roll the diameter of which can be more than 5 meters and the weight more than 160 tons. The purpose of reeling is to modify the paper web manufactured as planar to a more easily processable form. On the reel-up located in the main machine line, the continuous process of the paper machine breaks for the first time and shifts into periodic operation.

The web of parent roll produced in paper manufacture is full-width and even more than 100 km long so it must be slitted into component webs with suitable width and length for the customers of the paper mill and wound around winding cores into so-called customer rolls before delivering them from the paper mill. This slitting and winding up of the web takes place as known in an appropriate separate machine i.e. a slitter-winder.

On the slitter-winder, the parent roll is unwound in an unwinding section, the wide web is slit on a slitting section into several narrower component webs which are wound up on a winding section around winding cores, such as spools, into customer rolls. When the customer rolls are completed, the slitter-winder is stopped and the wound rolls i.e. the so-called set is removed from the machine and new winding cores for new component web rolls are to be transferred to winding stations for winding a new set of component web rolls. Then, the process is continued with the winding of a new set. These steps are repeated periodically until paper runs out of the parent roll, whereby a parent roll change is performed and the operation starts again as the unwinding of a new parent roll.

Slitter-winders employ winding devices for winding the customer rolls of different types depending on, inter alia, on the type of the fiber web being wound. On slitter-winders of two drum winder type, the web is guided from the unwinding via guide rolls to the slitting section, where the web is slit into component webs, which are further guided via guide rolls to the winding (support or carrier) drum of the two drum winder and slit component webs are wound around a winding core on support of the winding drums. On slitter-winders of the multistation winder type, the web is guided from the unwinding via guide rolls to the slitting section, where the web is slit into component webs, which are further guided via guide rolls to the winding drum/drums on the winding stations to be wound up onto winding cores into customer rolls. Adjacent component webs are wound up on different sides of the winding drum/drums. Multistation winders have one to three winding drums and in them each component web is wound to a component web roll in its own winding station.

In slitter-winders, as also generally in fiber web machines, the guide rolls may comprise a drive for rotating the guide roll or the guide rolls can be idle rolls i.e., without a drive and are freely rotating. While the fiber web runs over an idle roll, it rotates by effect of draw of the fiber web and rotating speed is defined by running speed of the fiber web. In slitter-winders and in fiber web machines, sometimes web breaks occur, which causes the idle roll to remain freely rotating until it finally stops, typically only after several, even after 20, minutes. This causes losses in production time as it is needed wait until the idle roll stops before the slitter-winder or other section or device of a fiber web machine can be restarted. Additionally, in some cases in connection of the web breaks broke is caused and it is necessary to manually clean out the broke. In this situation, freely rotating, even with rotating speed of several thousand rounds per minute, idle rolls cause significant work safety risks.

In slitter-winders and in fiber web machines it is known to use so-called segmented rolls, which comprise more than one, typically several segments of roll of which the roll is constructed. Often the segmented rolls are adjustable in view of degree of curvature in length direction of the roll, i.e., bow of the roll can be adjusted for using the roll as a spreader roll. These segmented rolls are typically idle rolls.

The idle rolls are supported at both ends on bearings on a mounting or similar support frame. The segmented rolls are typically supported on bearings on a mounting or similar support frame at ends and between the segments or the roll.

It is known from the prior art that idle rolls comprise a brake for stopping the free rotational movement in case of a web break or like situation otherwise causing the idle roll to rotate freely.

In WO patent application publication 2011/135175 A1 is disclosed a stopping device for a segmented roll in a fiber web machine for assisting the stopping of the rotation of one or more roll segment(s) of the segmented roll, which stopping device comprises at least one braking device, by means of which the roll segment can be stopped, and at least one surface contact member, which surface contact member is connected to said braking device, and that the stopping device further comprises actuators for optionally bringing/releasing the surface contact member into/from surface contact with the shell of one or more roll segment(s). In these kinds stopping devices i.e. brakes, which contact the surface of the roll to be stopped, one disadvantage is that the contacting surfaces are susceptible to wear. Thus, the brakes need maintenance and changes at regular intervals.

In US patent application publication US 2004/0182965 A1 is disclosed an idler roll in a paper handling machine, comprising: a paper web, passing through the paper handling machine; at least one idler roll, having a cylindrical shell positioned so that the paper web contacts the roll, the at least one idler roll mounted to be rotated about an axis by the action of the web of paper traveling contacting the idler roll; an electromagnet mounted closely spaced from the cylindrical shell of sufficient strength to bring the roll to a stop in less than about one minute. In US patent application publication 2006/0006271 is disclosed a paper handling machine and idler roll assembly, comprising: a paper web, passing through the paper handling machine; at least one idler roll mounted to the paper handling machine, the at least one idler roll having a cylindrical shell positioned so that the paper web contacts the cylindrical shell of the at least one idler roll, the idler roll mounted to the paper handling machine to be rotated about an axis by the paper web traveling in contact with the cylindrical shell of the idler roll; and a brake shoe mounted within the cylindrical shell, and biased by a resilient member away from engagement with an inside surface defined by the cylindrical shell; and an electromagnet positioned external to and closely spaced from the cylindrical shell, the electromagnet being operable to cause the brake shoe to engage the cylindrical shell inside surface. These kinds of brakes, which effect the braking based on electromagnetism a disadvantage is that the construction is complicated and thus, it is not very cost effective, especially bearing in mind that even one slitter-winder may comprise several idle rolls and especially several segmented rolls, each needing several brakes as a brake is needed for each segment of roll.

One object of the invention is to eliminate or at least minimize the above problems and disadvantages of prior art brakes of fiber web machines and in particular of slitter-winders.

A particular object of the invention is to create a non-contacting stopping device / brake, which is cost effective.

### Summary

To achieve the above-mentioned objects and those which come out later, the brake of the idle roll of a fiber web machine, in particular of a slitter-winder according to the invention is mainly characterized by what is presented in the characterizing part of claim 1. Advantageous features of the invention are defined in dependent claims.

According to the invention the brake of an idle roll of a fiber web machine, in particular of a slitter-winder, which idle roll comprises an outer shell surface, wherein the brake is located outside the outer shell surface of the idle roll in close vicinity of the idle roll in a non-contacting position and the brake comprises a permanent magnet, which is configured to be moved from a non-braking position to a braking position and vice versa by an actuator.

According to an advantageous feature the brake comprises a frame, wherein the frame has an inner hollow opening forming a chamber and a permanent magnet is movably located inside the chamber and configured to be moved from non-braking position to braking position and vice versa. The frame also protects an operator from contacting the moving parts of the brake.

According to an advantageous feature of the invention the actuator is a plunger and the brake is a plunger brake.

According to an advantageous feature of the invention the frame is openable and comprises a chamber frame and a cover frame, which are configured to form the outer structure of the brake.

According to an advantageous feature of the invention the chamber frame has a cylindrical form and the chamber has a cylindrical form.

According to an advantageous feature of the invention the cover frame is openably attached to the chamber frame, for example by a threading.

According to an advantageous feature of the invention the brake comprises an inside the chamber located brake support element, to which the permanent magnet is mounted.

According to an advantageous feature of the invention the inner wall of the chamber and the outer wall of the brake support element is sealed by a seal.

According to an advantageous feature of the invention the brake comprises a brake support element, the chamber has a bottom, the brake has a fluid connection configured to provide pressurized fluid, advantageously pressurize air, to the closed chamber from below the brake support element configured to move the brake support element and the permanent magnet inside the chamber towards the cover frame, when braking by the brake is required and the fluid connection is configured to provide suction for removing the pressurized fluid, advantageously pressurized air, from below the brake support element for moving the brake support element and the permanent magnet inside the chamber towards the bottom, when braking by the brake is not anymore required.

According to an advantageous feature of the invention the frame is polymeric material and advantageously produced by 3D printing.

According to an advantageous feature of the invention the actuator is a cylinder, advantageously a short stroke cylinder.

According to an advantageous feature of the invention the brake comprises control means to switch the braking on and off.

According to an advantageous feature of the invention the permanent magnet is moved a stroke in its movement from non-braking position to braking position, that the stroke is short, advantageously 5-50 mm.

According to an advantageous feature of the invention the brake is a compact element and has diameter of 30 - 100 mm and height of 30 - 100 mm.

According to an advantageous feature of the invention the brake is attached by fastening means to close vicinity of the idle roll to a non-contacting position.

According to an advantageous feature of the invention the distance between the brake and the idle roll is 0,1 - 10 mm, advantageously 0,1 - 2 mm, at the closest point.

According to an advantageous feature of the invention the idle roll is an aluminum roll.

The invention is especially suitable to be used in connection with idle rolls of slitter-winders and in particular in connection with segmented rolls.

The brake of a fiber web machine, in particular of a slitter-winder according to the invention and its advantageous features is non-contacting thus it is not susceptible to wear and need of maintenance and changes is decreased. The construction of the brake is compact and simple thus it is very cost-effective and securely functioning. It stops the free rotational movement of the idle roll fast and thus capacity of the section or device of the fiber web or of the slitter-winder is increased. By the brake the braking time is reduced to one tenth, when compared to situation, where no brake is used.

### Brief description of the drawings

Aspects of the invention, however, together with additional objects and advantages thereof, will be best understood from the following description of some example embodiments when read in connection with the accompanying drawings and in the following the invention is described in more detail referring to the accompanying drawing, in which
In figure 1 is schematically shown an example of an idle roll of a slitter-winder with an advantageous example of the brake according to the invention.
In figure 2 is schematically shown the advantageous example of the brake according to figure 1, when it is not braking.
In figure 3 is schematically shown the advantageous example of the brake according to figures 1-2, when it is braking.
In figures 4-5 is schematically shown the example of figure 1 as 3D views.
In figure 6 is schematically shown another advantageous example of the brake according to the invention.

### Detailed description

During the course of this description like numbers and signs will be used to identify like elements according to the different views which illustrate the invention. Repetition of some reference signs may have been omitted in the figures for clarity reasons.

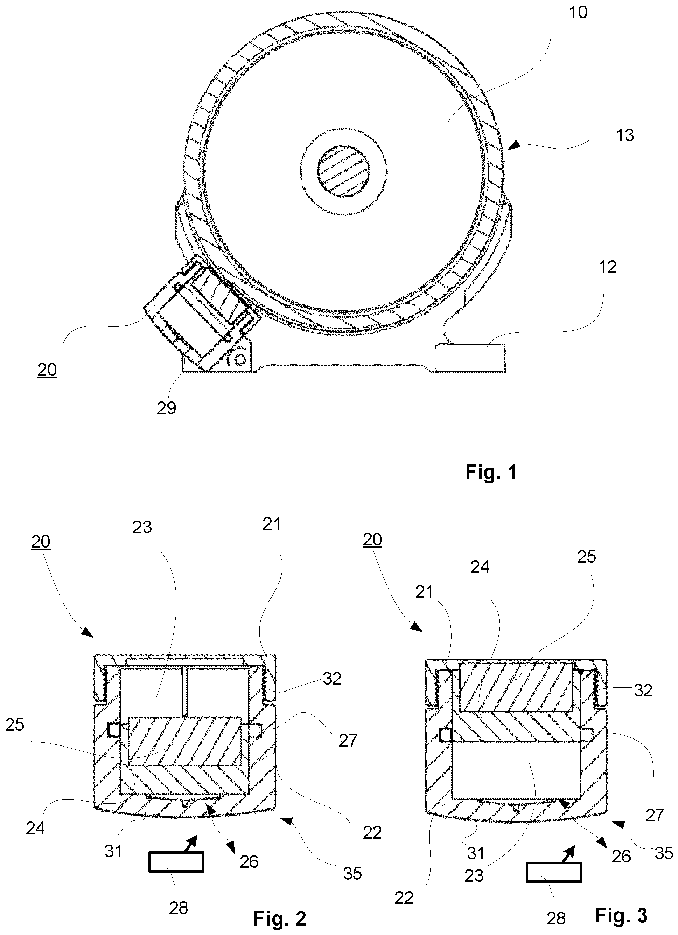

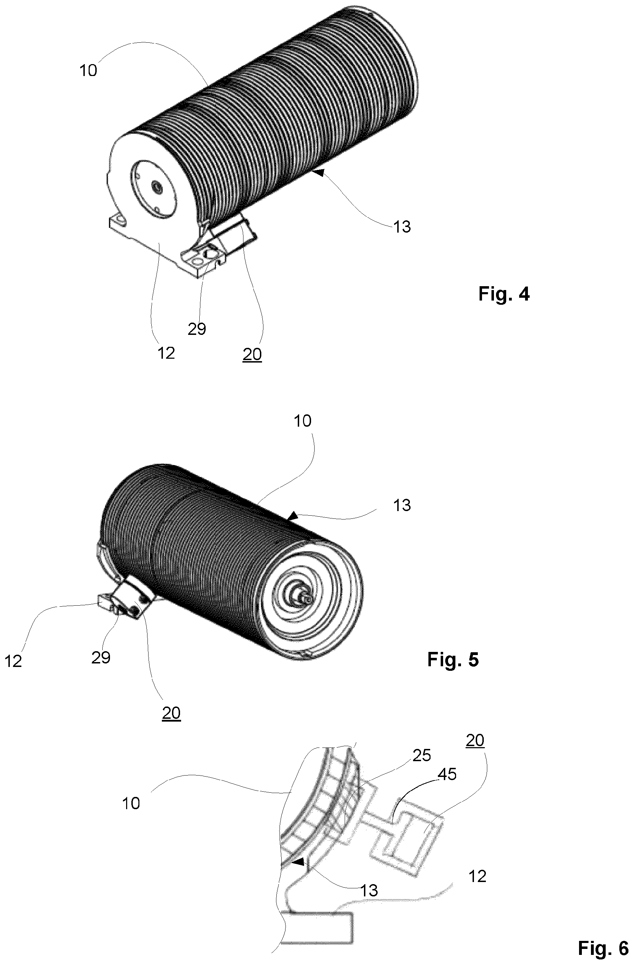

In figures 1 and 4-6 is shown an idle roll 10 with a brake 20. The idle roll 10 comprises an outer shell surface 13 and a mounting frame 12, to which the brake 20 is attached by fastening means 29 such that the brake 20 is located outside the outer shell surface 13 of the idle roll 10 in close vicinity of the idle roll 10 in a non-contacting position i.e. the brake 20 is not in contact with the outer shell surface 13 of the idle roll 10. The brake 20 comprises a permanent magnet 25, which is movable from a non-braking position to a braking position and vice versa, by an actuator, which in the example of figures 2-5 is a plunger 35 and in the example of figure 6 a cylinder 45.

In figure 2 is shown the brake 20 in non-braking situation and in figure 3 is shown the brake 20 in braking situation. The brake 20 has a frame 21, 22, advantageously formed openable and comprising a chamber frame 22 and a cover frame 21, which form the outer structure of the brake 20. The chamber frame 22 has a cylindrical form. The cover frame 21 is openably attached to the chamber frame 22, for example by a threading 32. When mounted in connection with an idle roll 10 (figures 1 and 4-5) the cover frame 21 of the brake 20 is towards the outer shell surface 13 of the idle roll 10.

The distance between the brake and the outer shell surface of the idle roll 10 is 0,1 - 10 mm, advantageously 0,1 - 10 mm at the closest point in the braking position.

The chamber frame 22 has inside a hollow non-though opening with a bottom 31 and a chamber 23 is thus formed inside the chamber frame 22 and the cover frame 21 closes the opening and thus, a closable chamber 23 is formed. The chamber 23 has a cylindrical form. Inside the chamber 23 is located a brake support element 24 with a permanent magnet 25. The inner wall of the chamber 23 and the outer wall of the brake support element 24 is sealed by a seal 27. The brake 20 has a fluid connection 26 configured to provide pressurized fluid, advantageously pressurize air, to the closed chamber 23 from below the brake support element 24 for moving the brake support element 24 and the permanent magnet 25 inside the chamber 23 towards the cover frame 21 and thus, towards the idle roll 10 to be braked, when braking by the brake 20 is required. The fluid connection 26 is also configured to provide suction for removing the pressurized fluid, advantageously pressurized air, from below the brake support element 24 for moving the brake support element 24 and the permanent magnet 25 inside the chamber 23 towards the bottom 31 and thus, away from the idle roll 10, when braking by the brake 20 is not anymore required. In the brake 20 the permanent magnet 25 is configured to create the braking effect when moved to be in contact with the cover frame 21 of the brake 20 i.e. to closest position in view of the outer shell surface 13 of the idle roll 10. As can be noted, the brake 20 comprises as the actuator a plunger 35 and thus has advantageously a plunger braking principle and is thus advantageously a plunger brake 20 the braking effect is provided by the permanent magnet 25.

The brake 20 advantageously comprises control means 28 to switch the braking on and off and thus to provide the pressurized fluid into the chamber and to remove the pressurized fluid from the chamber via the fluid connection 26.

The stroke of the permanent magnet 25 in its movement from non-braking position to braking position is short, advantageously 5-50 mm.

The chamber frame 22 and the cover frame 21 are advantageously of polymeric material and can be advantageously produced by 3D printing.

The brake 20 is a compact element and has diameter of 30 - 100 mm and height of 30 - 100 mm.

In figure 6 is shown another example of the brake 20. The brake 20 comprises the same features, fastening structures, movement principles and functions as in the above example but in this example the overall structure of the brake 20 is simplified. The brake 20 comprises the permanent magnet 25, which in this example is movable by the actuator, which a cylinder 45, advantageously by a short-stroke cylinder.

In the description in the foregoing, although some functions have been described with reference to certain features, those functions may be performable by other features whether described or not. Although features have been described with reference to certain embodiments or examples, those features may also be present in other embodiments or examples whether described or not. Above the invention has been described by referring to some advantageous examples only to which the invention is not to be narrowly limited. Many modifications and alterations are possible within the invention as defined in the following claims.

### Reference signs used in the drawing

10 idle roll
12 mounting frame
13 outer shell surface
20 brake
21 cover frame
22 chamber frame
23 chamber
24 brake support element
25 permanent magnet
26 fluid connection
27 seal
28 control device
29 fastening means
35 plunger
45 cylinder

## Claims

1. Brake with an idle roll (10) of a fiber web machine, in particular of a slitter-winder, which idle roll (10) comprises an outer shell surface (13), which brake (20) comprises a permanent magnet (25), which is configured to be moved from non-braking position to braking position and vice versa by an actuator (35, 45), **characterized in, that** brake (20) is located outside the outer shell surface (13) of the idle roll (10) in close vicinity of the idle roll (10) in a non-contacting position.

2. Brake according to claim 1, **characterized in, that** the brake (20) comprises a frame (21, 22), that the frame (21, 22) has an inner hollow opening forming a chamber (23) and that a permanent magnet (25) is movably located inside the chamber (23) and configured to be moved from non-braking position to braking position and vice versa.

3. Brake according to claim 1 or 2, **characterized in, that** the actuator is a plunger (35) and that the brake (20) is a plunger brake.

4. Brake according to claim 2, **characterized in, that** the frame (21, 22) is openable and comprises a chamber frame (22) and a cover frame (21), which are configured to form the outer structure of the brake (20).

5. Brake according to claim 4, **characterized in, that** the chamber frame (22) has a cylindrical form and the chamber (23) has a cylindrical form.

6. Brake according to claim 4 or 5, **characterized in, that** the cover frame (21) is openably attached to the chamber frame (22), for example by a threading (32).

7. Brake according to any of claims 2-6, **characterized in, that** the brake (20) comprises an inside the chamber (23) located brake support element (24), to which the permanent magnet (25) is mounted.

8. Brake according to claim 7, **characterized in, that** the inner wall of the chamber (23) and the outer wall of the brake support element (24) is sealed by a seal (27).

9. Brake according to any of the previous claims, **characterized in, that** the frame (21, 22) is polymeric material and advantageously produced by 3D printing.

10. Brake according to claim 1, **characterized in, that** the actuator is a cylinder (45), advantageously a short stroke cylinder.

11. Brake according to any of the previous claims, **characterized in, that** the brake (20) comprises control means (28) to switch the braking on and off.

12. Brake according to any of the previous claims, **characterized in, that** the permanent magnet (25) is moved a stroke in its movement from non-braking position to braking position, that the stroke is short, advantageously 5-50 mm.

13. Brake according to any of claims 5-12, **characterized in, that** the brake (20) is a compact element and has diameter of 30 - 100 mm and height of 30- 100 mm.

14. Brake according to any of the previous claims, **characterized in, that** the distance between the brake (20) and the idle roll (10) is 0,1-10 mm, advantageously 0,1-2 mm, at the closest point.

15. Brake according to any of the previous claims, **characterized in, that** the idle roll (10) is an aluminum roll.

## Patentansprüche

1. Bremse mit einer Mitläuferwalze (10) einer Faserstoffbahn-Maschine, insbesondere einer Rollen-Schneide- und Aufrollmaschine, wobei die Mitläuferwalze (10) eine äußere Mantelfläche (13) umfasst, wobei die Bremse (20) einen Permanentmagneten (25) umfasst, der dafür konfiguriert ist, durch einen Stellantrieb (35, 45) von einer nicht bremsenden Position zu einer bremsenden Position und umgekehrt bewegt zu werden, **dadurch gekennzeichnet, dass** die Bremse (20) außerhalb der äußeren Mantelfläche (13) der Mitläuferwalze (10) in enger Nachbarschaft der Mitläuferwalze (10) in einer nicht berührenden Position angeordnet ist.

2. Bremse nach Anspruch 1, **dadurch gekennzeichnet, dass** die Bremse (20) einen Rahmen (21, 22) umfasst, dass der Rahmen (21, 22) eine innere hohle Öffnung aufweist, die eine Kammer (23) bildet, und dass ein Permanentmagnet (25) beweglich innerhalb der Kammer (23) angeordnet und dafür konfiguriert ist, von einer nicht bremsenden Position zu einer bremsenden Position und umgekehrt bewegt zu werden.

3. Bremse nach Anspruch 1 oder 2, **dadurch gekennzeichnet, dass** der Stellantrieb ein Kolben (35) ist und dass die die Bremse (20) eine Kolbenbremse ist.

4. Bremse nach Anspruch 2, **dadurch gekennzeichnet, dass** der Rahmen (21, 22) öffenbar ist und einen Kammerrahmen (22) und einen Abdeckungsrahmen (21) umfasst, die dafür konfiguriert sind, die äußere Struktur der Bremse (20) zu bilden.

5. Bremse nach Anspruch 4, **dadurch gekennzeichnet, dass** der Kammerrahmen (22) eine zylindrische Form aufweist und die Kammer (23) eine zylindrische Form aufweist.

6. Bremse nach Anspruch 4 oder 5, **dadurch gekennzeichnet, dass** der Abdeckungsrahmen (21) öffenbar an dem Kammerrahmen (22), zum Beispiel durch ein Gewinde (32), befestigt ist.

7. Bremse nach einem der Ansprüche 2 bis 6, **dadurch gekennzeichnet, dass** die Bremse (20) ein innerhalb der Kammer (23) angeordnetes Bremsenstützelement (24) umfasst, an dem der Permanentmagnet (25) angebracht ist.

8. Bremse nach Anspruch 7, **dadurch gekennzeichnet, dass** die Innenwand der Kammer (23) und die Außenwand des Bremsenstützelements (24) durch eine Dichtung (27) abgedichtet sind.

9. Bremse nach einem der vorhergehenden Ansprüche, **dadurch gekennzeichnet, dass** der Rahmen (21, 22) aus Polymermaterial besteht und vorteilhafterweise durch 3D-Drucken hergestellt ist.

10. Bremse nach Anspruch 1, **dadurch gekennzeichnet, dass** der Stellantrieb ein Zylinder (45), vorteilhafterweise ein Kurzhubzylinder, ist.

11. Bremse nach einem der vorhergehenden Ansprüche, **dadurch gekennzeichnet, dass** die Bremse (20) Steuerungsmittel (28) umfasst, um das Bremsen ein- und auszuschalten.

12. Bremse nach einem der vorhergehenden Ansprüche, **dadurch gekennzeichnet, dass** der Permanentmagnet (25) in seiner Bewegung von einer nicht bremsenden Position zu einer bremsenden Position um einen Hub bewegt wird, dass der Hub kurz ist, vorteilhafterweise 5 bis 50 mm.

13. Bremse nach einem der Ansprüche 5 bis 12, **dadurch gekennzeichnet, dass** die Bremse (20) ein kompaktes Element ist und einen Durchmesser von 30 bis 100 mm und eine Höhe von 30 bis 100 mm aufweist.

14. Bremse nach einem der vorhergehenden Ansprüche, **dadurch gekennzeichnet, dass** der Abstand zwischen der Bremse (20) und der Mitläuferwalze (10) 0,1 bis 10 mm, vorteilhafterweise 0,1 bis 2 mm, an dem nächsten Punkt, beträgt.

15. Bremse nach einem der vorhergehenden Ansprüche, **dadurch gekennzeichnet, dass** die Mitläuferwalze (10) eine Aluminiumwalze ist.

## Revendications

1. Frein comportant un rouleau libre (10) d'une machine à bandes fibreuses, en particulier d'une coupeuse-bobineuse, lequel le rouleau libre (10) comprend une surface de coque de coque extérieure (13), lequel frein (20) comprend un aimant permanent (25) qui est configuré pour être passé d'une position de non-freinage à une position de freinage et vice versa par un actionneur (35, 45), **caractérisé en ce que** le frein (20) est situé à l'extérieur de la surface de coque extérieur e (13) du rouleau libre (10) à proximité étroite du rouleau libre (10) dans une position de non-contact.

2. Frein selon la revendication 1, **caractérisé en ce que** le frein (20) comprend un cadre (21, 22), que le cadre (21, 22) comporte une ouverture intérieure creuse formant une chambre (23) et qu'un aimant permanent (25) se trouve positionné de manière mobile à l'intérieur de la chambre (23) et est configuré pour être passé d'une position de non-freinage à une position de freinage et vice versa.

3. Frein selon la revendication 1 ou 2, **caractérisé en ce que** l'actionneur est un plongeur (35) et que le frein (20) est un frein de plongeur.

4. Frein selon la revendication 2, **caractérisé en ce que** le cadre (21, 22) peut être ouvert et comprend un cadre de chambre (22) et un cadre de recouvrement (21) qui sont configurés pour former la structure extérieure du frein (20).

5. Frein selon la revendication 4, **caractérisé en ce que** le cadre de chambre (22) a une forme cylindrique et la chambre (23) a une forme cylindrique.

6. Frein selon la revendication 4 ou 5, **caractérisé en ce que** le cadre de recouvrement (21) est fixé de manière à pouvoir être ouvert au cadre de chambre (22), par exemple par un filetage (32).

7. Frein selon l'une quelconque des revendications 2 à 6, **caractérisé en ce que** le frein (20) comprend un élément support de frein (24) situé à l'intérieur de la chambre (23) et sur lequel l'aimant permanent (25) est monté.

8. Frein selon la revendication 7, **caractérisé en ce que** la paroi intérieure de la chambre (23) et la paroi extérieure de l'élément support de frein (24) sont étanchéifiées par un joint (27).

9. Frein selon l'une quelconque des revendications précédentes, **caractérisé en ce que** le cadre (21, 22) est en matériau polymérique et est avantageusement produit par impression 3D.

10. Frein selon la revendication 1, **caractérisé en ce que** l'actionneur et un cylindre (45), avantageusement un cylindre à course courte.

11. Frein selon l'une quelconque des revendications précédentes, **caractérisé en ce que** le frein (20) comprend un moyen de commande (28) pour activer et désactiver le freinage.

12. Frein selon l'une quelconque des revendications précédentes, **caractérisé en ce que** l'aimant permanent (25) se déplace sur une course dans son mouvement d'une position de non-freinage à une position de freinage, que la course est courte, avantageusement 5 à 50 mm.

13. Frein selon l'une quelconque des revendications 5 à 12, **caractérisé en ce que** le frein (20) est un élément compact et a un diamètre de 30 à 100 mm et une hauteur de 30 à 100 mm.

14. Frein selon l'une quelconque des revendications précédentes, **caractérisé en ce que** la distance entre le frein (20) et le rouleau libre (10) est de 0,1 à 10 mm, avantageusement 0,1 à 2 mm, au point le plus proche.

15. Frein selon l'une quelconque des revendications précédentes, **caractérisé en ce que** le rouleau libre (10) est un rouleau en aluminium.
